# EUROPÄISCHE PATENTSCHRIFT

(11) **EP 1 636 892 B1**
(45) Veröffentlichungstag und Bekanntmachung des Hinweises auf die Patenterteilung: **22.08.2007**
(21) Anmeldenummer: 04728509.3
(22) Anmeldetag: 21.04.2004
(51) Int. Cl.: H02K 5/24, H02K 1/18

(54) **ENTKOPPLUNGSVORRICHTUNG FÜR ELEKTROMOTOREN UND VERFAHREN ZUR HERSTELLUNG EINES ELEKTROMOTORS**
DECOUPLING DEVICE AND METHOD FOR THE PRODUCTION OF AN ELECTRIC MOTOR
DISPOSITIF DE DECOUPLAGE ANTI-VIBRATIONS POUR MOTEURS ELECTRIQUES ET PROCEDE POUR LA PRODUCTION D'UN MOTEUR ELECTRIQUE

(30) Priorität: 12.06.2003 DE 10326996
(43) Veröffentlichungstag der Anmeldung: 22.03.2006
(73) Patentinhaber: ROBERT BOSCH GMBH, 70442 Stuttgart (DE)
(72) Erfinder: WINKLER, Wolfgang, 77746 Schutterwald (DE); NITZSCHE, Hartmut, 77815 Buehl (DE); SEIBERT, Heinz, 77855 Achern (DE); RUPP, Bernhard, 75056 Sulzfeld (DE); KUPFERER, Michael, 77866 Rheinau Freistett (DE); STAFNE, Michael, 77830 Buehlertal (DE)
(86) Internationale Anmeldenummer: PCT/DE2004/000825
(87) Internationale Veröffentlichungsnummer: WO 2004/112219

(56) Entgegenhaltungen:
- DE-A- 4 334 202
- DE-A- 10 142 174
- US-A- 3 746 894
- US-A- 4 461 446
- US-A- 5 772 176

## Beschreibung

### Stand der Technik

Die Erfindung geht aus von einem Elektromotor nach dem Oberbegriff des Anspruchs 1 sowie einem Verfahren zur Herstellung des entsprechenden Elektromotors nach dem Oberbegriff des Anspruchs 9.

Elektromotoren, wie sie beispielsweise in Gebläsen von Heiz- und/oder Klimaanlagen in Kraftfahrzeugen verwendet werden, sind in der Regel gegenüber dem Fahrzeug schwingungstechnisch entkoppelt, um eine Übertragung des Körperschalls des Motors bzw. der Gebläseeinheit auf die Karosserie und somit in den Innenraum des Fahrzeuges zu vermeiden beziehungsweise zu reduzieren.

Laufgeräusche des Elektromotors und laufbedingte, beispielsweise durch eine Unwucht eines anzutreibenden Gebläserades erzeugte Schwingungen, übertragen sich somit in hohem Maße auf das Gehäuse und führen zu einer unerwünschten Geräuschentwicklung.

Gängige Befestigungsmethoden für derartige Motoren bestehen darin, den kompletten Motor in ein Kunststoffgehäuse oder ein Gehäuse aus Metall einzusetzen, an dem ein Flansch zur Verbindung mit der Klimaanlage vorgesehen ist. Normalerweise wird Gummi bzw entsprechend geformte Gummielemente zwischen dem Motor und das Motorgehäuse bzw. in den Flansch eingelegt, um Schwingungsanregungen der Klimaanlage oder der Karosserie zu dämpfen und störende Geräusche für den Fahrer bzw. seine Mitfahrer im Innenraum des Fahrzeuges zu unterdrücken.

Bei elastischen Entkopplungselementen, die einerseits den Elektromotor an Stützbereichen halten und andererseits für eine Dämpfung sorgen sollen, führen diese gegensätzlichen Forderungen dazu, dass die Entkopplungselemente beispielsweise vorgespannt werden. Da die Dämpfung der Schwingungen somit durch Walkarbeit in den Entkopplungselementen erfolgt, ist keine optimale Entkopplung möglich.

Während des Betriebes des Elektromotors entstehen unter anderem in der Hauptanregungsschwingungsrichtung des Motors tangentiale Drehschwingungen sowie Schwingungen in radialer und axialer Richtung. Dies bedeutet für eine Entkopplung zwischen dem Motor und einem Aufnahmegehäuse des Motors, welches gleichzeitig als Entkopplungsgehäuse dienen soll, dass die Entkopplung in tangentialer Richtung besonders weich, in axialer Richtung bzw. radialer Richtung jedoch deutlich steifer ausfallen muss.

Es befinden sich zur Zeit etliche Varianten im Praxiseinsatz, die Entkopplungselemente zwischen dem Gehäuseflansch bzw. zwischen Motor und Motorgehäuse anzuordnen, um eine Schwingungsentkopplung des Elektromotors gegenüber dem Motorgehäuse und damit gegenüber der Karosserie zu erreichen.

So offenbart beispielsweise die DE 43 34 124 A1 eine Vorrichtung zum Aufnehmen eines Elektromotors, die eine besonders schwingungsarme und damit geräuschdämpfende Wirkung dadurch erzielt, dass zwischen den Innenwänden dieser Aufnahmevorrichtung und den diesen zugewandten Außenwänden des Motorgehäuses wenigstens ein elastisches Dämpfelement angeordnet ist, das sich an den einander zugewandten Wänden der Aufnahmevorrichtung und des Motorgehäuses abstützt.
Die elastischen Dämpfelemente, die in einer bevorzugten Ausführungsform der Vorrichtung der DE 43 34 124 A1 entsprechend geformte Gummielemente sind, bedeuten einen erhöhten Montage- und Materialaufwand, der die Kosten einer solchen Vorrichtung unnötiger Weise erhöht.

Typischerweise wird der Elektromotor in ein Adaptergehäuse eingebracht, an dem entsprechende Haltemittel zur Aufnahme der Entkopplungskörper vorgesehen sind. Die Einheit aus Elektromotor, Adapter und Entkopplungsmitteln wird dann in ein Motorgehäuse oder ein anderes Funktionsgehäuse eingesetzt.

Aus der DE 199 42 840 A1 ist eine Entkopplungsvorrichtung für Aktuatoren, wie beispielsweise Elektromotoren bekannt, bei der ein ein- oder mehrteiliges Entkopplungsgehäuse mit einem Funktionsgehäuse derart verbunden ist, dass eine Mehrzahl von paarweise angeordneten Entkopplungselementen zwischen den Gehäusen angeordnet ist und jeweils von einem Halteelement fixiert wird, wobei der Aktuator an den Halteelementen angreift.

In der DE 43 34 202 wird ein Elektormotor vorgeschlagen, der vorzugsweise zum Betreiben eines zur Klimaanlage eines Kraftfahrzeuges gehörenden Gebläses dient. Der Elektromotor umfasst einen zumindest annähernd rohrförmigen Gehäuseabschnitt, auf dessen äußerer Mantelfläche mit radialem Abstand mehrere gestellfeste Stützbereiche benachbart und zwischen der Mantelfläche und den Stützbereichen jeweils elastische Elemente angeordnet sind, welche einerseits an der äußeren Mantelfläche und andererseits an den Stützflächen abstützend den Elektromotor halten und Erregerschwingungen des arbeitenden Elektromotors unterdrücken.

Weiterhin ist aus der US 5 772 176 A ein vibrationsisolierendes Befestigungssystem für einen Elektromotor bekannt, das eine Mehrzahl von aus jeweils einem nahezu rechtwinklig gebogenen Metallstab bestehenden Befestigungsarmen aufweist. Die Befestigungsarme werden mit jeweils einem ersten Schenkel an Haltern drehbar gelagert befestigt, wobei die Halter aus einem Motorgehäuse ausgestanzt und herausgebogen sowie in Umfangsrichtung des Motorgehäuses voneinander beabstandet angeordnet sind. Über einen zweiten Schenkel der Befestigungsarme erfolgt die Befestigung des Elektromotors an einem Lüftergehäuse.

Die DE 101 42 174 A1 zeigt einen Elektromotor, der ein Motorgehäuse sowie am Motorgehäuse angeordnete Mittel zum Haltern des Motorgehäuses im Innern eines hohlzylindrischen Aufnahmeteils, insbesondere eines Gebläsegehäuses, aufweist. Dabei sind die Mittel zum Haltern des Motorgehäuses im Aufnahmeteil als am Motorgehäuse angeordnete, aus einem Polring des Motorgehäuses vorstehende, durch Ausprägen gebildete Noppen ausgestaltet, die sich beim Einpressen des Motorgehäuses in das Aufnahmeteil kraftschlüssig an die Innenwand des Aufnahmeteils anpassen.

Aus der EP 0 682 396 A2 ist bekannt, elastische Kugeln, vorzugsweise aus einem Elastomer zu verwenden, um zwei Bauteile gegeneinander zu entkoppeln. Dabei sind die Kugeln in je einer ellipsoidalen Mulde untergebracht, so dass den Kugeln ein gewisses Maß an freier Rotationsbewegung ermöglicht wird. Jedes der Bauteile hat solche Mulden, die jeweils so angebracht sind, dass sich die Mulden der beiden Bauteile im eingebauten Zustand gegenüberliegen.

Die US 3 746 894 zeigt schließlich einen Elektromotor, der mittels an dem Gehäuse des Elektromotors montierten Halteelementen vibrationsisolierend an einem Lüftergehäuse befestigt ist. Dazu weisen die Halteelemente jeweils eine Öffnung auf, durch die ein hantelförmiges, elastisches Entkopplungselement derart hindurchgeführt wird, dass die beiden seitlich angebrachten Kugeln des Entkopplungselement mit entsprechend ausgeformten Schalen von einem an dem Lüftergehäuse angebrachten Gegenstücken der Halteelemente zusammenwirken.

Nachteilig bei den meisten der genannten Anordnungen ist die oftmals sehr aufwendige Konstruktion, die aufgrund der Vielzahl von Bauteilen einen deutlich erhöhten Montage- und somit auch Kostenaufwand zur Schwingungsisolierung eines Elektromotors erfordert.

### Vorteile der Erfindung

Der erfindungsgemäße Elektromotor mit den Merkmalen des Anspruchs 1 hat demgegenüber den Vorteil, dass auf einfache Weise Halteelemente zur Befestigung von Entkopplungselemente ausgebildet werden können. Dadurch, dass die Halteelemente der Entkopplungselemente einstückig mit dem Polgehäuse des Elektromotors ausgebildet sind, entfällt die Notwendigkeit, den Elektromotor in ein zusätzliches Adaptergehäuse einzubringen, welches dann wiederum gegenüber einem Aufnahmegehäuse schwingungsentkoppelt werden kann. Da die Halteelemente zudem jeweils einen Einschnitt aufweisen, in den die Entkopplungselemente nach dem Ausstellen der Halteelemente einsteckbar sind, ergibt sich eine sehr einfach und schnelle Montage des Elektromotors.

In vorteilhafter Weise werden die Halteelemente für die schwingungsisolierenden Entkopplungselemente direkt aus dem Material des Polringes ausgeformt. So kann beispielsweise bereits bei der Herstellung des Polgehäuses dafür gesorgt werden, dass die Halteelemente in die das spätere Polgehäuse bildenden Stahlblechstreifen ausgeformt werden. Nach dem Zuschneiden und dem anschließenden Rollen des Polgehäuses, sowie dem Verschließen der Fügungsnaht kann dann das Polgehäuse mit den angelegten Halteelementen in der Motormontage weiterverarbeitet werden.

Wird der Motor beispielsweise in ein komplettes Gebläsemodul eingebaut, so können nun nachträglich die Halteelemente für die Entkopplungselemente mit einem Werkzeug ausgestellt werden und entsprechende Entkopplungselemente in die Einschnitte der Halteelemte eingesteckt werden. Auf diese Weise ist es möglich, den Motor gegenüber dem Motorgehäuse bzw. dem Aufnahmegehäuse einfach und effizient zu entkoppeln und ein optimiertes, das heisst reduziertes Geräuschverhalten beispielsweise eines Gebläses zu erreichen. Der bisher weitgehend notwendige Adapter zur Aufnahme des Elektromotors entfällt in vorteilhafter Weise vollständig.

Ist eine Entkopplung des Motors gegenüber einem Motorgehäuse oder einem Aufnahmegehäuse nicht erforderlich, so kann der Motor ohne Entkopplungselemente und mit angelegten Halteelementen eingebaut und betrieben werden.

Der erfindungsgemäße Elektromotor ermöglicht somit eine deutliche Reduzierung der Bauteile und fuhrt damit zu einer vereinfachten und an die jeweilen Anforderungen anpassbare Montage des Motorsystems.

Vorteilhafte Ausführungen des erfindungsgemäßen Elektromotors ergeben sich aus den in den Unteransprüchen aufgeführten Merkmalen und Weiterbildungen.

Die Haltelaschen sind im wesentlichen in radialer Richtung ausgestellt, so dass in den Einschnitten der Halteelemente eingesteckte Entkopplungselemente bei einem Einbau des Elektromotors zwischen der Polgehäuseoberfläche und der Innenseite eines den Motor aufnehmenden Motorgehäuses zu liegen kommen.

In einer vorteilhaften Ausführungsform des erfindungsgemäßen Elektromotors ist das Polgehäuse als ein doppelt gerollter d. h. zweilagiger Zylinder mit einem Stahlblechstreifen für einen inneren Polring des Polgehäuses und einem Stahlblechstreifen für einen äußeren Polring des Polgehäuses ausgeformt. Auf diese Weise ist es möglich, auf den äußeren Polring die Halteelemente auszubilden und in dem inneren Polring jeweils lediglich eine Öffnung vorzusehen, um die Halteelemente für die Entkopplungselemente durch ein entsprechendes Werkzeug auszustellen. Durch ein derartiges, doppelt gerolltes Polgehäuse ist es möglich, trotz der Fehlstellen in der Oberfläche des Polgehäuses, den magnetischer Fluss nur im geringen Maße zu beeinflussen, so dass das Polgehäuse seine volle Funktionstüchtigkeit als Rückschlussring behält.

In einer alternativen Ausführungsform ist es jedoch auch möglich, das Polgehäuse lediglich einlagig auszubilden und die Halteelemente für die Entkopplungskörper aus der Gehäusewand des Polgehäuses auszubilden. Die durch die Fehlstellen in dem als magnetischer Rückschlussring dienenden Polgehäuse erzeugte Reduzierung des magnetischen Flusses ist hierbei in Kauf zu nehmen. In dieser Ausführungsform ist die erfindungsgemäße Vorrichtung extrem einfach aufgebaut.

Vorzugsweise sind die Enkopplungselemente in Form von insbesondere hantelförmigen Wälzkörpern ausgebildet, so dass eine sehr einfache Montage durch ein Einstecken in die entsprechenden Einschnitte der Halteelemente möglich ist.

Mit dem erfindungsgemäßen Verfahren zur Herstellung eines Elektromotors ist es auf einfache Weise möglich, Halteelemente vorzusehen, die es - falls erforderlich - ermöglichen, elastische Entkopplungselemente am Polgehäuse eines Elektromotors zu befestigen und somit den Elektromotor schwingungsisolierend in einer Motoraufnahme, beispielsweise einem Gebläsegehäuse zu integrieren. Vorzugsweise wird das Polgehäuse doppelt gerollt, um möglichst wenig des magnetischen Flusses durch die Ausstellung der Haltemittel zu verlieren. Ein solches doppelt gerolltes Polgehäuse besteht ursprünglich aus zwei Stahlblechstreifen, die vor dem Arbeitsgang des "Rollens" zuerst zugeschnitten, beispielsweise gestanzt werden. Bei diesem Arbeitsgang können in vorteilhafter Weise gleichzeitig auch bereits die vorgesehenen Halteelemente am Stahlblechstreifen für einen äußeren Polring des Polgehäuses und ggf. zusätzlich jeweils ein zugeordnetes Langloch an entsprechender Stelle des Stahlblechstreifens für einen inneren Polring des Polgehäuses eingebracht werden. Dieses Langloch am Innenring ermöglicht das spätere Einfahren eines Ausstellwerkzeuges, mit dem die Halteelemente aus dem Polgehäuse in radialer Richtung ausgestellt werden können.

Nach dem Zuschneiden der Stahlblechstreifen des Polgehäuses erfolgt in bekannter Weise der weitere Fertigungsverlauf für das Polgehäuse, d. h. das Rollen der Bleche zu einem Zylinder, sowie das Verschließen der Fügungsnaht. Das so hergestellte Polgehäuse kann dann bei noch angelegten Halteelementen in der Motor-Montage weiterverarbeitet werden. Wird ein solcher Motor beispielsweise in ein komplettes Gebläsemodul eingebaut, können die Halteelemente nachträglich mit einem entsprechenden Werkzeug ausgestellt und Entkopplungselemente an den Halteelementen durch Einstecken in entsprechende Einschnitte angebracht werden. Diese Entkopplungselemente sorgen dann dafür, dass der Elektromotor schwingungsisolierend in dem Gebläsemodul bzw. einem Motorgehäuse angeordnet werden kann.

Ein entsprechend vorbereiteter Motor, bei dem die Halteelemente jedoch noch nicht ausgestellt sind, kann in vorteilhafter Weise auch als separates Endprodukt an einen Kunden geliefert werden, der entsprechend dem von ihm gewünschten Verwendungszweck die Halteelemente ausstellen kann, oder aber den Elektromotor ohne die Verwendung der erfindungsgemäßen Halteelemente nutzen kann.

Weitere Vorteile des erfindungsgemäßen Elektromotors sind in den nachfolgenden Zeichnungen sowie der zugehörigen Beschreibung der Ausführungsbeispiele aufgeführt.

### Zeichnung

In der Zeichnung sind Ausführungsbeispiele der erfindungsgemäßen Elektromotors dargestellt die in der nachfolgenden Beschreibung näher erläutert werden. Die Figuren der Zeichnung, deren Beschreibung sowie die Ansprüche enthalten zahlreiche Merkmale in Kombination. Ein Fachmann wird diese Merkmale auch einzeln betrachten und zu sinnvollen, weiteren Kombinationen zusammenfassen, die somit ebenfalls in der Beschreibung offenbart sind.

Es zeigen
- Fig. 1: einen Elektromotor mit erfindungsgemäßer Vorrichtung in einer schematisierten Darstellung,
- Fig. 2: einen Längsschnitt (2a) durch einen in ein Motorgehäuse eingesetzten Elektromotor mit erfindungsgemäßer Vorrichtung, sowie eine Detailansicht (2b) im Bereich der erfindungsgemäßen Halteelemente,
- Fig. 3: ein erstes, alternatives Ausführungsbeispiel für die Anordnung der Entkopplungselemente, in einer Übersicht (3a) und in einer Detail-Darstellung (3b),
- Fig. 4: ein zweites, alternatives Ausführungsbeispiel für die Anordnung der Entkopplungselemente, in einer Übersicht (4a) und in einer Detail-Darstellung (4b),
- Fig. 5: ein erfindungsgemäßes Polgehäuse eines Elektromotors in perspektivischer Darstellung,
- Fig. 6: das erfindungsgemäßen Polgehäuses eines Elektromotors gemäß Figur 5 im Zustand noch nicht ausgestellter Halteelemente, in einer vereinfachten, perspektivischen Darstellung,
- Fig. 7: ein Ausführungsbeispiel für Entkopplungselemente im Längsschnitt und
- Fig. 8: ein alternatives Ausführungsbeispiel für Entkopplungselemente im Längsschnitt.

### Beschreibung

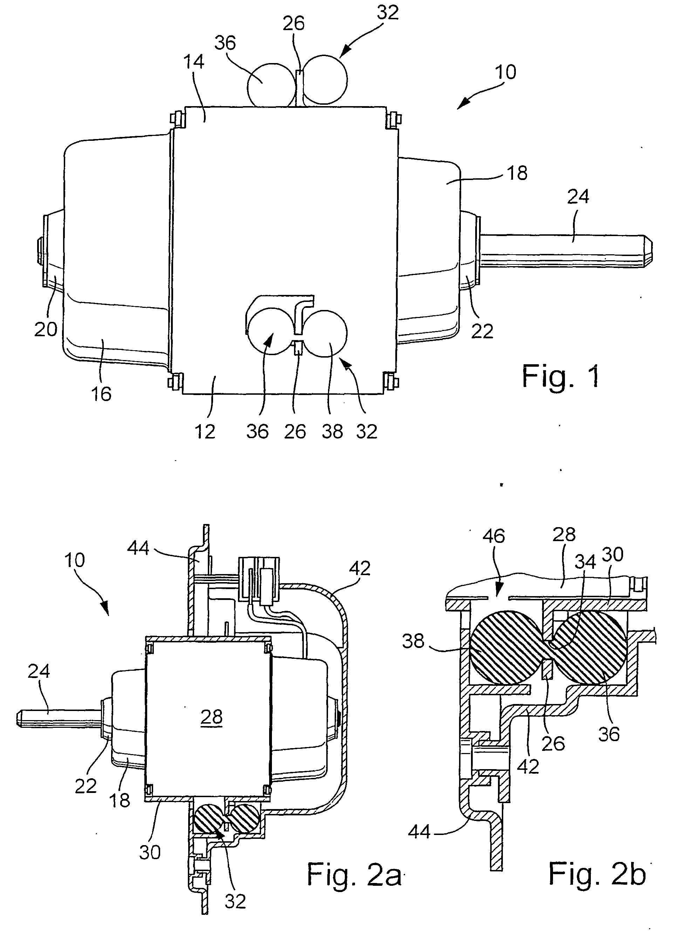

Fig. 1 zeigt einen Elektromotor, wie er beispielsweise in einem Klimagebläse eines Kraftfahrzeuges zur Verwendung kommt.

Der Elektromotor 10 weist einen als Polgehäuse 12 dienenden zweilagigen Polring 14 auf, an dessen Innenumfangsfläche in bekannter Weise Magnete angebracht sind, die als Stator der elektrischen Maschine 10 dienen. Der Polring 14 dient dabei als magnetischer Rückschlusskreis des Elektromotors 10. Ebenfalls am Polring 14 befestigt ist ein erstes, wellenseitiges Lagerschild 16, sowie ein zweites ankerseitiges Lagerschild 18.

Das erste Lagerschild 16 sowie das zweite Lagerschild 18 weisen jeweils ein Lager 20 bzw. 22 auf, in denen die mit dem Rotor des Elektromotors 10 wirkverbundene Welle 24 geführt wird.

Das Polgehäuse des Elektromotors gemäß der Fig. 1 besteht aus einem zweilagigen, zylindrischen Polring 14, der durch Rollen und anschließendes Zusammenfügen zweier entsprechend ausgeformter Stahlblech-Streifen hergestellt wird.

Die äußere Lage des Polrings 14 weist eine Mehrzahl von laschenförmigen Halteelementen 26 auf, die einstückig mit der äußeren Lage des Polringes ausgebildet sind und gleichmäßig über den Umfang des Polgehäuses verteilt sind. In vorteilhafter Weise sind zumindest drei solcher Halteelemente, vorzugsweise in einer Ebene senkrecht zur Achse des Polgehäuses abgeordnet. In anderen Ausfdhrungsbeispielen können andere Anzahlen von Halteelementen und/oder andere Orientierungen derselben genutzt werden.

Das Polgehäuse 12 besteht ursprünglich aus zwei Stahlblech-Streifen 28 bzw. 30, die im Rahmen des Fertigungsprozesses vor dem Arbeitsgang des "Rollens" zuerst beispielsweise durch einen Stanzprozess zugeschnitten und ausgeformt werden. Bei diesem Arbeitsgang werden die vorgesehenen Halteelemente 26 in Form von Ausstell-Laschen am Stahlblech-Streifen 30, der später die äußere Lage des Polgehäuses 12 bilden wird, eingebracht. In den Stahlblech-Streifen 28, der später die innere Lage des Polringes bilden wird, wird in entsprechender Weise jeweils ein Loch, vorzugsweise ein Langloch eingebracht. Das Langloch am Innenring 28 ermöglicht das spätere Einfahren eines Ausstell-Werkzeuges zum Ausstellen der laschenförmigen Halteelemente 26. Nach dem Ausformen der Stahlblech-Streifen 28 bzw. 30 erfolgt der normale weitere Fertigungsablauf für das Polgehäuse 12 des Elektromotors. Die Stahlbleche 28 beziehungsweise 30 werden gerollt, die Naht wird verschlossen und das Polgehäuse kalibriert.

Das Polgehäuse 12 kann dann mit noch angelegten Halteelementen 26 in der Motor-Montage weiter verarbeitet werden oder einem Endverbraucher übergeben werden. Wird der Elektromotor 10 in ein komplettes Motorgehäuse, beispielsweise ein Gebläse-Modul eingebaut, so werden nachträglich die Halteelemente 26 mit einem entsprechenden Werkzeug ausgestellt und Entkopplungselemente 32 an den Halteelementen befestigt.

Die Halteelemente 26 des Elektromotors 10 nach dem Ausführungsbeispiel der Fig. 1 weisen jeweils einen Einschnitt 34 auf, in den die Entkopplungselemente 32 eingesteckt werden können. In vorteilhafter Weise befinden sich zumindest drei Halteelemente 26 gleichmäßig verteilt auf der Oberfläche des Polgehäuses 12.

Die einstückigen Entkopplungselemente 32 des Ausführungsbeispiels gemäß Fig. 1 besitzen im wesentlichen eine hantelartige Form, bestehend aus zwei elastischen, kugelförmigen Elementen 36 bzw. 38, die durch eine quaderförmige Verbindung mit kleinerem Querschnitt 40 fest miteinander verbunden sind. Andere Querschnitte des Verbindungsstegs 40 sind selbstverständlich ebenso möglich. Das Verbindungselement bzw. der Verbindungssteg 40 zwischen den beiden kugelförmigen Elementen 36 und 38 des Entkopplungselementes 32 wird jeweils in den Einschnitt 34 des Halteelementes 26 eingesetzt und in diesem beispielsweise verklemmt. Die Entkopplungselemente 32 bestehen typischerweise aus einem elastischen Material, beispielsweise einem Elastomer. Die hantelartige Ausformung der Entkopplungselemente 32 dient darüber hinaus zusätzlich der einfachen Montierbarkeit der Entkopplungselemente.

Bei einer Drehmomentabgabe des Elektromotors 10 kommt es zu einer Rollbewegung der als Kugeln ausgebildeten Entkopplungselemente 36 bzw. 38. Die Entkopplungselemente werden dabei elastisch zusammengedrückt und erzeugen aufgrund der elastischen Verformung eine Rückstellkraft. Auf diese Weise ist es möglich, die Schwingungen des Elektromotors 10 zu dämpfen, so dass diese gar nicht oder nur deutlich reduziert an das Motorgehäuse 42 bzw. dem Befestigungsflansch 44 weitergegeben werden.

Hierbei entfällt in vorteilhafter Weise die Notwendigkeit einer zusätzlichen schwingungsdämpfenden Halterung zur Aufnahme des Motors. Dabei ist es möglich, die radial vom Polgehäuse abstehenden Halteelemente ohne wesentlichen elektrischen Flussverlust auszubilden.

Nachfolgend werden exemplarisch einige Ausführungsbeispiele für den Einbau der erfindungsgemäßen Vorrichtung vorgestellt.

Fig. 2 zeigt einen in ein Motorgehäuse 42 eingesetzten Elektromotor 10 sowie eine Detailansicht im Bereich eines Entkopplungselementes 32, bei eingesetztem Elektromotor. Die Aufnahme von DC-Motoren in Gebläse-Modulen erfolgt bisher typischer Weise mittels eines separaten Kunststoff-Adapters bzw. anderen, zusätzlichen Kunststoffteilen, welche die notwendigen Entkopplungselemente und den Motor aufnehmen und dadurch den Motor zum Motorgehäuse hin entkoppeln. Bei der erfindungsgemäßen Vorrichtung zur schwingungsentkoppelnden Halterung eines Elektromotors ist ein solcher zusätzlicher Adapter zur Aufnahme des Motors im Motorgehäuse nicht mehr notwendig.

Der Gebläsemotor nach dem Ausführungsbeispiel der Figur 2 ist zwischen einer Motorflanschplatte 44 und dem Motorgehäuse 42 gehalten. Die als Dämpfungselemente wirkenden Entkopplungselemente 32 sind an den radial vom Motor abstehenden Halteelementen 26, die einstückiger Teil des Rückschlussringes sind, angebracht. In der Motorflanschplatte 44 bzw. dem Motorgehäuse 42 können in vorteilhafter Weise bogenförmige Aufnahmeschalen für die Entkopplungselemente 32 ausgeformt sein, so dass ein reibungsarmer Zusammenbau ermöglicht wird. Die Montage eines solchen Gebläsemotors wird somit auf einen axialen Fügevorgang vereinfacht.

Die Entkopplungselemente 32, die über die Verbindungsmittel 40 mit den Halteelementen 26 des Polgehäuses 12 verbunden sind, kommen in der Einbaulage des Elektromotors zwischen der Oberfläche des Polgehäuses 12 einerseits und der inneren Oberfläche des Motorgehäuses 42 bzw. der inneren Oberfläche eines Flansches 44 zu liegen. Der Flansch 44 schließt dabei das Motorgehäuse 42 ab und dient zudem zur Befestigung des Gesamtsystems beispielsweise an der Karosserie eines Kraftfahrzeuges.

Durch die Verwendung der Kugelentkopplungselemente in Kombination mit einer entsprechenden Abstimmung der Motorflanschplatte 44 bzw. des Motorgehäuses 42 ist es möglich, die elastischen Eigenschaften der Entkopplungselemente 32 in der Einspannung gezielt zu beeinflussen, um so ggf. ein unterschiedliches Dämpfungsverhalten in radialer, axialer oder tangentialer Richtung zu erzielen.

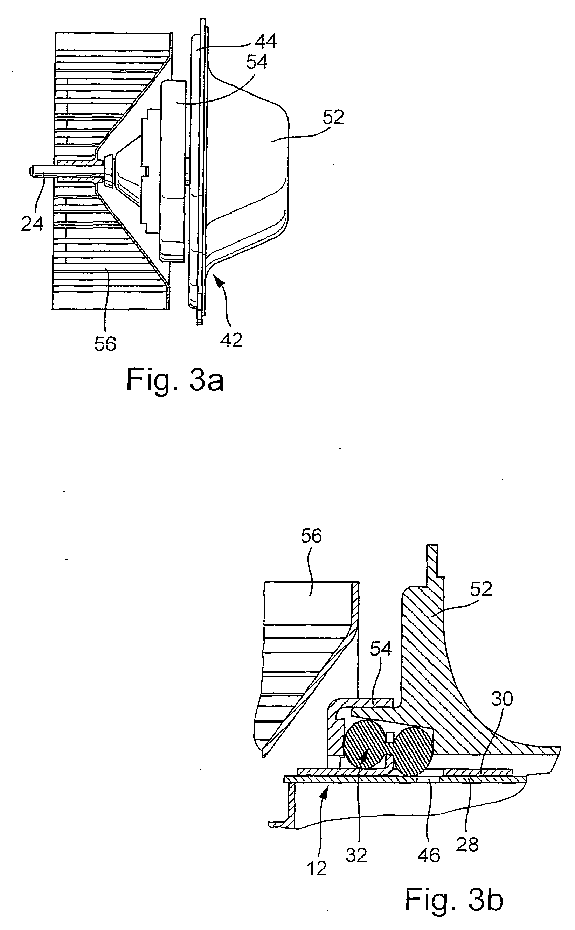

Figur 3 zeigt ein alternatives Ausführungsbeispiel eines Gebläses mit einer erfindungsgemäßen Entkopplungsvorrichtung. Die Übersichtsdarstellung der Figur 3a zeigt ein komplettes Gebläse 11, mit einem in einem Motorgehäuse 42 installierten Elektromotor. Die Welle 24 des Elektromotors ist aus dem Motorgehäuse herausgeführt und fest mit einem Gebläserad 56 verbunden.

Das Motorgehäuse 42 des Ausführungsbeispiels gemäß Figur 3 besteht aus einem topfförmigen Motorgehäuse-Unterteil 52 und einem ringförmigen, mit dem Unterteil verbundenen Motorgehäuse-Oberteil 54. Am Motorgehäuse-Unterteil 52 ist der Motorflansch 44 einstückig angeordnet.

Figur 3b zeigt in einer Detailansicht die Anordnung einer erfindungsgemäßen Entkopplungsvorrichtung im Ausführungsbeispiel gemäß Figur 3. Das Entkopplungselement 32 sitzt in diesem Fall komplett im Motorgehäuse 42 und kommt sowohl gegen das Polgehäuse 12 des Elektromotors 10, als auch gegen das Motorgehäuse-Unterteil 52 und das Motorgehäuse-Oberteil 54 zur Anlage. Durch eine entsprechende Variation des Abstandes d zwischen dem Motorgehäuse-Unterteil 52 und dem Motorgehäuse-Oberteil 54 kann der Einpressdruck auf die Entkopplungselemente 32 geändert werden. Auf diese Weise ist es möglich unterschiedliche Grade der Entkopplung für die erfindungsgemäße Entkopplungsvorrichtung zu realisieren. Der Abstand d lässt sich beispielsweise dadurch variieren, dass der das Motorgehäuse-Oberteil bildende Ring 54 unterschiedlich weit auf das Motorgehäuse-Unterteil 52 aufgedreht oder aufgeschraubt wird. Andere Befestigungsmethoden zwischen dem Ober- und Unterteil des Motorgehäuses 42 sind natürlich ebenso möglich.

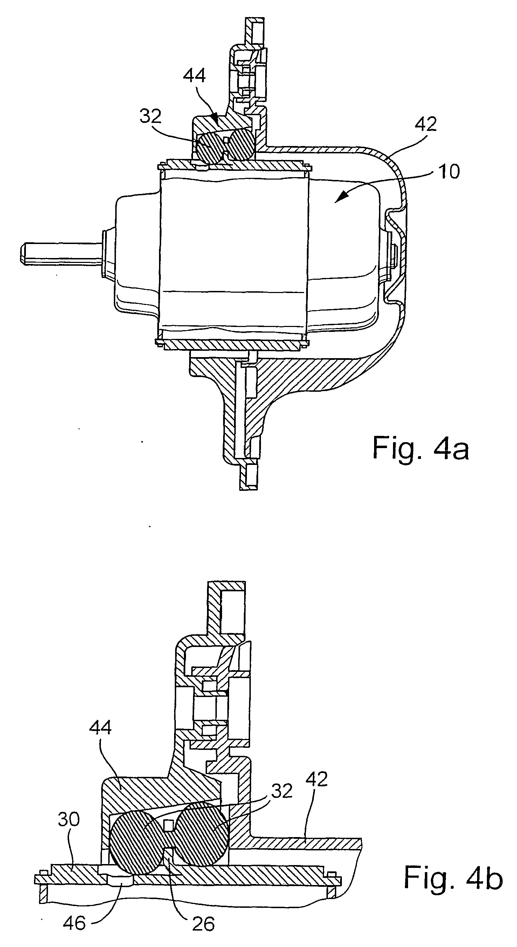

Figur 4 zeigt ein weiteres Ausführungsbeispiel der Antriebseinheit eines Gebläses. Das Gebläserad ist in dieser Darstellung demontiert. Die Übersichtsdarstellung der Figur 4a zeigt einen in einem Motorgehäuse 42 installierten Elektromotor 10 Antriebswelle 24. verbunden.

Das Motorgehäuse 42 des Ausführungsbeispiels gemäß Figur 4 besteht aus einem topfförmigen Motorgehäuse-Unterteil 58, welches in Richtung des nicht dargestellten Gebläserades durch einen Gehäuseflansch 60 abgeschlossen ist. Die Entkopplungselemente 32 kommen in dieser Ausführungsform einseitig im Motorflansch zu liegen. Es ergibt sich lediglich eine Anpressfläche 62 mit dem eigentlichen Motorgehäuse.

Figur 4b zeigt zur Verdeutlichung die erfindungsgemäße Entkopplungsvorrichtung gemäß dem Ausführungsbeispiel der Figur 4 in einer Detailansicht.

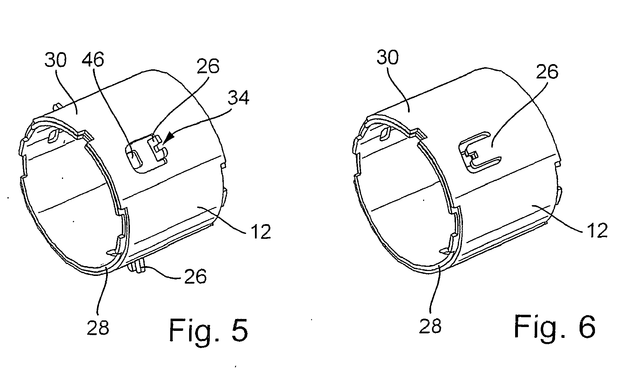

Fig. 5 zeigt ein zweilagiges Polgehäuse 12 mit entsprechend ausgestellten Halteelementen 26. Die Lagen des Polgehäuses werden dabei jeweils aus einem gerollten Stahlblechstreifen 28 bzw. 30 gebildet. Der Stahlblechstreifen 28 bildet den inneren, der Stahlblechstreifen 30 den äusseren Polring. Die Halteelemente 26 des Ausführungsbeispiels gemäß Fig. 5 sind einstückig aus dem Stahlblechstreifen 30 ausgearbeitet und somit auf der Oberfläche des Polgehäuses 12 angeordnet und dabei im wesentlichen radial zum Polgehäuse ausgestellt. Zur Aufnahme der Entkopplungselemente 32 sind Einschnitte 34 in den Halteelementen 26 vorgesehen, die zu Fixierung der Verbindungsstege 40 dienen. Die Halteelemente besitzen in diesem Ausführungsbeispiel eine im wesentlichen tangentiale Orientierung zur Oberfläche des Polgehäuses, das heisst, die Längsseite verläuft senkrecht zur Achse des Polgehäuses. Ebenfalls sichtbar in Fig. 5 ist eine Öffnung 46 in Form eines Langloches im inneren Stahlblech-Streifen 28 des zweilagigen Polgehäuses. Durch diese Öffnungen 46, die jeweils einem Halteelement 26 zugeordnet sind, kann beim erfindungsgemäßen Herstellungsverfahren für einen Elektromotor ein Werkzeug hindurchgreifen, um die Halteelemente 26, die einstückig im äußeren Stahlblech-Streifen 30 des Polringes 14 ausgebildet sind und ursprünglich noch plan in diesem anliegen, auszustellen.

Figur 6 zeigt ein Polgehäuse 12 gemäß dem Ausführungsbeispiel der Figur 5 mit noch nicht ausgestellten Halteelementen 26. In dieser Darstellung ist sichtbar, dass die Halteelemente beispielsweise lediglich im äusseren Polring 30 ausgestanzt werden können. Je nach Verwendung des Elektromotors können dann die Halteelemente in einem weiteren Fertigungsschritt entweder ausgestellt werden oder aber auch plan im Polring verbleiben.

Prinzipiell ist es auch möglich, das Polgehäuse 12 lediglich einlagig, das heisst mit lediglich einem Polring 30 auszubilden. Die Verluste im magnetischen Fluss des einen Polringes aufgrund der dann unterbrochenen Oberflächenstruktur des Polgehäuses stellen einen gewissen Nachteil dieser Ausführungsform dar. In dieser vereinfachten Ausführungsform ergibt sich jedoch andererseits ein deutlich reduzierter Material-, Fertigungs- und Montageaufwand, der gegenüber den Nachteilen abzuwägen ist.

Neben der in Fig. 2 dargestellten Form der Entkopplungselemente sind selbstverständlich auch andere Formen, insbesondere Wälzkörper, wie beispielsweise rollenartige oder zylindrische Elemente möglich und einsetzbar. Die Figuren 10 und 11 zeigen einige Beispiele für mögliche Formen der Entkopplungselemente. Selbstverständlich sind weitere Ausformungen für die Entkopplungselemente möglich, ohne die zugrundeliegende Erfindungsidee zu verlassen

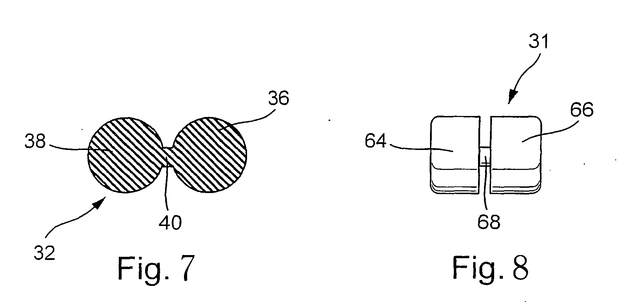

Figur 7 zeigt eine schematische Ansicht der Entkopplungselemente 32. Ein solches Entkopplungselement besteht in beschriebener Weise aus zwei, im wesentlichen kugelförmigen Teilkörpern 36 bzw. 38 und einem, diese Teilkörper verbindenden Steg 40. Der Verbindungssteg kann dabei beispielsweise einen quadratischen oder auch einen runden Querschnitt haben. Das Entkopplungselement 32 ist in vorteilhafter Weise einstückig aus einem elastischen Kunststoff gefertigt.

Figur 8 zeigt ein gegenüber dem Ausführungsbeispiel der Figur 7 modifiziertes Ausführungsbeispiel von Entkopplungselementen als ein weiteres Beispiel für einen Entkopplungskörper. Die Entkopplungselemente 31 gemäß dem Ausführungsbeispiel der Figur 8 bestehen aus zwei walzenförmigen Teilkörpern 64 und 66, die über einen einstückigen Verbindungssteg 68 miteinander fest verbunden sind.

Im Bereich ihres Verbindungssteges werden die Entkopplungselemente31 bzw. 32 in die entsprechenden Ausnehmungen 34 der Halteelemente 26 eingesteckt. Dabei dient der jeweilige Verbindungssteg der Entkopplungselemente in vorteilhafter Weise auch als Montagehilfe, da beispielsweise die kugelförmigen Körper 36 und 38 nicht einzeln montiert werden müssen.

Im Gegensatz zu bekannten Entkopplungscinrichtungen des Standes der Technik benötigt der erfindungsgemäße Elektromotor kein zusätzliches Adaptergehäuse, in das der Elektromotor eingeschoben wird und das typischer Weise entsprechende Aufnahmen für Entkopplungselemente aufweist. Dies bedeutet eine deutliche Vereinfachung der Montage, da ein zusätzliches Aufschieben oder Montieren eines solchen Adapters entfällt.

Darüber hinaus ist ein Aufbiegen der als Halteelemente 26 dienenden Aufnahme-Laschen am fertig montierten Motor von außen und sogar noch nachträglich möglich. Dadurch bleibt die Formgenauigkeit des Polgehäuses 12 erhalten und ein Motor kann beispielsweise auch als separates Endprodukt ohne die bereits ausgestellten Halteelemente an einen Kunden ausgeliefert werden.

Der erfindungsgemäße Elektromotor ist nicht auf die in den Figuren und der Beschreibung dargestellten Ausführungsbeispiele beschränkt. Vielmehr dienen diese Ausführungsbeispiele lediglich zur Verdeutlichung der der Erfindung zugrundeliegenden Idee die in den Ansprüchen definiert ist.

Der erfindungsgemäße Elektromotor ist nicht beschränkt auf die Verwendung für einen Gebläsemotor. Vielmehr lassen sich alle Elektromotoren, für die beim Einbau eine schwingungsdämpfende Entkopplung gewünscht ist, entsprechend der Erfindung ausgestalten.

Der erfindungsgemäße Elektromotor ist insbesondere nicht beschränkt auf die in den Ausführungsbeispielen gezeigte Anzahl und Form der Entkopplungselemente. Die Auslegung der Entkopplungselemente ist dabei derart zu gestalten, dass die elastischen Eigenschaften der Dämpfungselemente in der Einspannung für die radiale, axiale und tangentiale Fixierung gezielt beeinflussbar sind, um ein optimales Dämpfungsverhalten und damit die gewünschte Geräuschreduzierung zu erzielen.

## Patentansprüche

1. Elektromotor (10), insbesondere Gebläsemotor, mit einer schwingungsentkoppelnden Halterung, wobei der Elektromotor (10) zumindest ein als magnetischen Rückschlussring dienendes Polgehäuse (12) aufweist, mit Halteelementen (26) zur Befestigung von elastischen Entkopplungelementen (31, 32), **dadurch gekennzeichnet, dass** die Halteelemente (26) der Entkopplungselemente (31, 32) ausstellbar sind und einstückig mit mindestens einem Polring (14) des Polgehäuses (12) ausgebildet sind und jeweils einen Einschnitt (34) aufweisen, in den die Entkopplungselemente (31, 32) nach dem Ausstellen der Halteelemente (26) einsteckbar sind.

2. Elektromotor nach Anspruch 1, **dadurch gekennzeichnet, dass** die Halteelemente (26) radial zum Polgehäuse (12) ausgestellt sind.

3. Elektromotor nach Anspruch 1, **dadurch gekennzeichnet, dass** das Polgehäuse (12) einlagig aufgebaut ist.

4. Elektromotor nach Anspruch 1, **dadurch gekennzeichnet, dass** das Polgehäuse (12) mehrlagig aufgebaut ist.

5. Elektromotor nach Anspruch 4, **dadurch gekennzeichnet, dass** das Polgehäuse (12) als doppelt gerollter Zylinder mit einem Stahlblechstreifen (28) für einen inneren Polring des Polgehäuses (12) und einem Stahlblechstreifen (30) für einen äußeren Polring des Polgehäuses (12) ausgeformt ist.

6. Elektromotor nach Anspruch 5, **dadurch gekennzeichnet, dass** die Halteelemente (26) einstückig aus dem Stahlblechstreifen (30) für den äußeren Polring ausgearbeitet sind und dass der Stahlblechstreifen (28) für den inneren Polring den jeweiligen Halteelementen (27) zugeordnete Öffnungen (46) in Form eines Langlochs aufweist, durch die ein Werkzeug zum Ausstellen der Halteelemente (26) hindurchgreifen kann.

7. Elektromotor nach Anspruch 1, **dadurch gekennzeichnet, dass** die Entkopplungselemente (31, 32) in Form von Wälzkörpern ausgebildet sind.

8. Elektromotor nach Anspruch 7, **dadurch gekennzeichnet, dass** die Entkopplungselemente (31, 32) hantelförmig ausgebildet sind.

9. Verfahren zur Herstellung eines Elektromotors (10), insbesondere eines Gebläsemotors, mit zumindest einem als magnetischen Rückschlussring dienenden Polgehäuse (12), aufweisend zumindest folgende Schritte:
- Ausformung von das Polgehäuse (12) bildenden Metall-Teilen (28, 30),
- einstückige Ausformung von Halteelementen (26) in den Metall-Teilen (28, 30) des Polgehäuses (12) derart, dass die Halteelemente (26) ausstellbar sind und jeweils einen Einschnitt (34) aufweisen zum Einstecken von elastischen Entkopplungselementen (31, 32) für den Elektromotor (10) nach ihrem Ausstellen.

10. Verfahren zur Herstellung eines Elektromotors nach Anspruch 9, **dadurch gekennzeichnet, dass** die Halteelemente (26) im wesentlichen in radialer Richtung des Polgehäuses (12) ausgestellt werden.

11. Verfahren nach einem der vorhergehenden Ansprüche 9 oder 10, **dadurch gekennzeichnet, dass** die Halteelemente (26) einstückig aus einem Stahlblechstreifen (30) für einen äußeren Polring des Polgehäuses (12) ausgearbeitet werden und dass in einem Stahlblechstreifen (28) für einen inneren Polring des Polgehäuses (12) den jeweiligen Halteelementen (27) zugeordnete Öffnungen (46) in Form eines Langlochs ausgearbeitet werden, durch die ein Werkzeug zum Ausstellen der Halteelemente (26) hindurchgreifen kann.

## Claims

1. Electric motor (10), in particular fan motor, comprising a vibration-isolating retaining means, with the electric motor (10) having at least one pole casing (12) which serves as a magnetic return ring, having retaining elements (26) for attaching elastic isolation elements (31, 32), **characterized in that** the retaining elements (26) of the isolation elements (31, 32) can be raised and are integrally formed with at least one pole ring (14) of the pole casing (12) and each have a incision (34) into which the isolation elements (31, 32) can be inserted after the retaining elements (26) are raised.

2. Electric motor according to Claim 1, **characterized in that** the retaining elements (26) are raised radially with respect to the pole casing (12).

3. Electric motor according to Claim 1, **characterized in that** the pole casing (12) is of single-layer design.

4. Electric motor according to Claim 1, **characterized in that** the pole casing (12) is of multi-layer design.

5. Electric motor according to Claim 4, **characterized in that** the pole casing (12) is shaped as a twice-rolled cylinder with a steel-sheet strip (28) for an inner pole ring of the pole casing (12) and a steel-sheet strip (30) for an outer pole ring of the pole casing (12).

6. Electric motor according to Claim 5, **characterized in that** the retaining elements (26) are made in one piece from the steel-sheet strip (30) for the outer pole ring, and **in that** the steel-sheet strip (28) for the inner pole ring has openings (46) in the form of a slot, which openings are associated with the respective retaining elements (27) and through which a tool for raising the retaining elements (26) can engage.

7. Electric motor according to Claim 1, **characterized in that** the isolation elements (31, 32) are designed in the form of rolling bodies.

8. Electric motor according to Claim 7, **characterized in that** the isolation elements (31, 32) are of dumbbell-like design.

9. Method for producing an electric motor (10), in particular a fan motor, having at least one pole casing (12) which serves as a magnetic return ring, said method comprising at least the following steps:
- shaping metal parts (28, 30) which form the pole casing (12),
- integrally forming retaining elements (26) in the metal parts (28, 30) of the pole casing (12) in such a way that the retaining elements (26) can be raised and each have an incision (34) for inserting elastic isolation elements (31, 32) for the electric motor (10) after the said retaining elements are raised.

10. Method for producing an electric motor according to Claim 9, **characterized in that** the retaining elements (26) are raised substantially in the radial direction of the pole casing (12).

11. Method according to either of the preceding Claims 9 and 10, **characterized in that** the retaining elements (26) are made in one piece from a steel-sheet strip (30) for an outer pole ring of the pole casing (12), and **in that** openings (46) in the form of a slot, which openings are associated with the respective retaining elements (27) and through which a tool can engage in order to raise the retaining elements (26), are made in a steel-sheet strip (28) for an inner pole ring of the pole casing (12).

## Revendications

1. Moteur électrique (10) notamment moteur de ventilateur comportant un support de découplage anti-vibrations,
le moteur électrique (10) comportant au moins un boîtier polaire (12) servant de bague de retour de flux magnétique, avec des éléments de fixation (26) pour fixer des éléments de découplage élastiques (31, 32),
**caractérisé en ce que**
les éléments de fixation (26) des éléments de découplage (31, 32) peuvent être déployés et ils sont réalisés d'une seule pièce avec au moins un anneau polaire (14) du boîtier polaire (12) et comportent chacun une encoche (34) recevant les éléments de découplage (31, 32) après déploiement des éléments de fixation (26).

2. Moteur électrique selon la revendication 1,
**caractérisé en ce que**
les éléments de fixation (26) sont déployés dans les directions radiales par rapport au boîtier polaire (12).

3. Moteur électrique selon la revendication 1,
**caractérisé en ce que**
le boîtier polaire (12) est réalisé en une seule couche.

4. Moteur électrique selon la revendication 1,
**caractérisé en ce que**
le boîtier polaire (12) est réalisé en plusieurs couches.

5. Moteur électrique selon la revendication 4,
**caractérisé en ce que**
le boîtier polaire (12) est réalisé sous la forme d'un double cylindre enroulé ayant un ruban d'acier (28) pour un anneau polaire intérieur du boîtier polaire (12) et un ruban d'acier (30) pour un anneau polaire extérieur du boîtier polaire (12).

6. Moteur électrique selon la revendication 5,
**caractérisé en ce que**
l'élément de fixation (26) est usiné en une seule pièce dans le ruban d'acier (30) de l'anneau polaire extérieur et le ruban d'acier (26) de l'anneau polaire intérieur comporte des orifices (46) en forme de trous oblongs associés aux éléments de fixation (26) respectifs, qui permettent le passage d'un outil pour déployer les éléments de fixation (26).

7. Moteur électrique selon la revendication 1,
**caractérisé en ce que**
les éléments de découplage (31, 32) ont la forme d'organes de roulement.

8. Moteur électrique selon la revendication 7,
**caractérisé en ce que**
les éléments de découplage (31, 32) sont en forme de haltère.

9. Procédé de fabrication d'un moteur électrique (10), notamment d'un moteur de ventilateur comportant un boîtier polaire (12) servant de bague de retour de flux magnétique et comprenant les étapes suivantes :
- mise en forme des parties de métal (28, 30) du boîtier polaire (12),
- former en une seule pièce des éléments de fixation (26) dans les pièces métalliques (28, 30) du boîtier polaire (12) pour que les éléments de fixation (26) puissent être déployés et comportent chacun une encoche (34) pour engager les éléments de découplage élastiques (31, 32) du moteur électrique (10) après le déploiement.

10. Procédé de fabrication d'un moteur électrique selon la revendication 9,
**caractérisé en ce que**
les éléments de fixation (26) sont déployés principalement dans la direction radiale du boîtier polaire (12).

11. Procédé selon l'une des revendications 9 ou 10,
**caractérisé en ce que**
les éléments de fixation (26) sont usinés en une seule pièce dans une bande de tôle d'acier (30) pour l'anneau polaire extérieur du boîtier polaire (12) et
le ruban d'acier (28) de l'anneau polaire intérieur du boîtier polaire (12), a des ouvertures (46) en forme de trous oblongs pour l'élément de fixation (26), permettant le passage d'un outil pour déployer les éléments de fixation (26).
